# EUROPÄISCHE PATENTANMELDUNG

(11) **EP 3 978 890 A1**
(43) Veröffentlichungstag der Anmeldung: **06.04.2022**
(21) Anmeldenummer: 20199556.0
(22) Anmeldetag: 01.10.2020
(51) Int. Cl.: G01M 3/32, F16L 59/065, G01L 9/00, G01L 21/00

(54) **VORRICHTUNG ZUR ÜBERWACHUNG EINES VAKUUMS**

(71) Anmelder: König Metall GmbH & Co. KG, 76571 Gaggenau (DE); TEB Dr. Kerspe GmbH, 69256 Mauer (DE)
(72) Erfinder: Fischer, Michael, 76571 Gaggenau (DE); Kerspe, Jobst H., 69256 Mauer (DE); Schansker, Fabian, 76307 Karlsbad (DE)
(74) Vertreter: Geitz Truckenmüller Lucht Christ

(57) **Zusammenfassung**

Die Erfindung betrifft eine Vorrichtung zur Überwachung eines Vakuums, insbesondere in sicherheitsrelevanten Bauteilen

Mittels der erfindungsgemäßen Vorrichtung (1) wird eine flächenbündige Druckmessvorrichtung, bei der die Übertragung des Messsignals nicht durch die umgebende Metallwandung gestört wird und die für gestützte Vakuum-Isolierungen, welche als sicherheitsrelevante Bauteile, unter anderem in Pkws, verwendet werden, geeignet ist, bereitgestellt, die sich dadurch auszeichnet, dass diese eine Dichtungsmembran (2), ein piezoelektrisches Element (4) und eine starre druckdifferenzfreie Referenzebene (3) aufweist, die die Dichtungsmembran (2) vollständig umgibt, wobei die Dichtungsmembran (2) einen Vakuumraum (6) abdichtet und das piezoelektrische Element (4) auf der Dichtungsmembran (2) angeordnet ist, sodass eine druckabhängige Verschiebung der Dichtungsmembran (2) durch das piezoelektrische Element (4) bestimmbar ist.

## Beschreibung

Die Erfindung betrifft eine Vorrichtung zur Überwachung eines Vakuums, insbesondere in sicherheitsrelevanten Bauteilen.

Solche Vorrichtungen sind unter anderem aus der DE 101 59 518 A1, der DE 10 2006 042 426 A1, der WO 2013/116843 A1 und der EP 1 953 517 A1 vorbekannt.

Die deutsche Patentanmeldung DE 101 59 518 A1 offenbart ein Vakuum-Isolation-Paneel (VIP) mit Drucküberwachung, das eine zerstörungsfreie Prüfung zu jedem beliebigen Zeitpunkt auch an bereits eingebauten und damit nicht mehr zugänglichen VIP ermöglicht. Zur Bestimmung des Drucks wird die aktuelle Vorspannung der Folienumhüllung des VIP herangezogen, wobei der Spannungszustand mittels Sensoren bestimmt wird.

Ferner offenbart die deutsche Patentanmeldung DE 10 2006 042 426 A1 eine Vorrichtung zur berührungslosen Kontrolle von Vakuumdämmplatten mittels RFID-Technik. Auch hier handelt es sich um eine berührungslose Bestimmung des Vakuums einer folienumhüllten Vakuumdämmplatte. Zur Bestimmung wird ein elektrischer Schalter, der auf Belastungsdruck reagiert, mit einer RF-Transponderspule und einem Mikrochip kombiniert und in die Vakuumdämmplatte eingebaut. Im evakuierten Zustand kann dann der Transponder mithilfe eines Lesegerätes von außen erkannt werden. Im Falle einer Belüftung des Vakuumpaneels wird der elektrische Kontakt geöffnet, sodass der RF-Transponder nicht mehr ausgelesen werden kann. Daraus lässt sich schlussfolgern, dass das Vakuumpaneel belüftet und nicht mehr funktionstüchtig ist.

Weiterhin offenbart die internationale Patentanmeldung WO 2013/116843 A1 eine Qualitätskontrolle für Vakuumisolationspaneele und Verfahren zu deren Verwendung. Hierbei steht eine Radiofrequenz-Identifikationseinheit in betriebsbereiter Kommunikation mit einem Sensor, welcher Informationen des Paneels an einen externen Radiofrequenz-Indikationsempfänger überträgt, wobei ein Datenvergleichselement in betriebsbereiter Kommunikation mit dem Funkfrequenz-Identifikationsempfänger derart konfiguriert ist, dass es aggregierte, vom Funkfrequenz-Identifikationsempfänger erhaltene Paneel-Leistungsdaten empfängt und analysieren kann.

All diesen vorbekannten Vorrichtungen ist gemeinsam, dass jeweils die erwähnte Messvorrichtung in die Paneele, insbesondere in die sogenannten Vakuumisolationspaneele, eingesetzt ist, unter anderem deshalb, weil die ummantelnde Folie entweder das Messprinzip, z.B. durch Biegung der flexiblen/weichen Mantelfolie, unterstützt oder die Übertragung des Signals mittels RFID aus dem Inneren des Vakuumisolationspaneels begünstigt wird. Allerdings sind diese Messvorrichtungen bei metallischen Hüllen, welche bei gestützten Vakuum-Isolierungen für sicherheitsrelevante Bauteile, wie sie unter anderem im Kfz.-Bereich eingesetzt werden, nicht einsetzbar.

Darüber hinaus offenbart die europäische Patentanmeldung EP 1 953 517 A1 eine Anordnung zur Überwachung der Dichtigkeit eines evakuierten Raums, der durch mindestens eine metallische Wandung hermetisch dicht verschlossen ist. Hierdurch ist eine mit dem evakuierten Raum verbundene Einrichtung vorbekannt, die aus einem metallischen Faltenbalg, der hermetisch dicht mit dem evakuierten Raum verbunden ist, und aus einem elektrischen Näherungsschalter besteht, an den eine Auswerteinheit angeschlossen ist. Diese zeigt eine, jeweils durch eine Undichtigkeit der Wandung hervorgerufene, unzulässige Druckerhöhung, im evakuierten Raum an.

Ein solches System ist für die Verwendung einer gestützten Vakuum-Isolierung als sicherheitsrelevantes Bauteil in einem Pkw ungeeignet, da es aufgrund dessen Bauhöhe in einem Pkw zu viel Bauraum beanspruchen würde, also in einem PKW eher nicht verbaut werden kann.

Die Aufgabe, die sich die vorliegende Erfindung nunmehr stellt, ist die Bereitstellung einer möglichst flächenbündigen Druckmessvorrichtung, bei der die Übertragung des Messsignals nicht durch die umgebende Metallwandung gestört wird und die für gestützte Vakuum-Isolierungen, welche als sicherheitsrelevante Bauteile, unter anderem in Pkws, im Anlagenbau oder bei tragenden Elementen im Hochbau, verwendet werden, geeignet ist.

Diese Aufgabe wird mit einer Vorrichtung gemäß dem unabhängigen Anspruch 1 gelöst. Vorteilhafte Ausgestaltungen der Erfindung können den abhängigen Ansprüchen entnommen werden.

Erfindungsgemäß handelt es sich um eine Vorrichtung zur Überwachung eines Vakuums, insbesondere zur Überwachung eines Vakuums in sicherheitsrelevanten Bauteilen, z.B. einem Batteriegehäuse. Die erfindungsgemäße Vorrichtung zeichnet sich dadurch aus, dass diese eine Dichtungsmembran, ein piezoelektrisches Element sowie eine starre und druckdifferenzfreie Referenzebene aufweist. Die Dichtungsmembran dichtet einen Vakuumraum ab, wobei darüber hinaus auf der Dichtungsmembran das piezoelektrische Element angeordnet ist. Das piezoelektrische Element kann dabei beispielsweise fest mit der Dichtungsmembran verbunden sein. Die Referenzebene umhüllt dabei vollständig die Dichtungsmembran, wobei zwischen der Dichtungsmembran und der die Dichtungsmembran vollständig umhüllenden Referenzebene Atmosphärendruck herrscht.

Ändert sich der Druck bzw. das Vakuum innerhalb des Vakuumraums, welcher durch die Dichtungsmembran gegenüber der Außenwelt abgedichtet ist, so kann diese druckabhängige Änderung durch das auf der Dichtungsmembran angeordnete piezoelektrische Element ermittelt werden. Eine Druckänderung kann dabei beispielsweise in der Veränderung der Form bzw. durch Dehnung der Dichtungsmembran erfolgen.

Um kleine Druckveränderung im Vakuumraum durch entsprechende Veränderungen der Dichtungsmembran und damit auch des piezoelektrischen Elements bestimmen zu können und trotzdem die hohen Dichtigkeitsanforderung z.B. einer gestützten Vakuum-Isolierung zu erfüllen, muss die Membran möglichst dünn und trotzdem eine ausreichend große Fläche aufweisen. Daher schlägt die Vorrichtung in einer vorteilhaften Ausgestaltung vor, dass die Dichtungsmembran eine Edelstahlfolie ist, die eine Foliendicke von wenigstens 0,5 mm aufweist.

In einer weiteren vorteilhaften Ausgestaltung, um möglichst kleine Druckveränderungen an der Dichtungsmembran zu bestimmen, sieht die erfindungsgemäße Vorrichtung vor, dass das piezoelektrische Element ebenfalls in Form einer Folie ausgestaltet ist. Daher kann beispielsweise das piezoelektrische Element die gesamte Fläche der Dichtungsmembran einnehmen, sodass schon kleinste Druckänderungen durch das piezoelektrische Element feststellbar sind.

In einer abermaligen vorteilhaften Ausgestaltung weist die Vorrichtung einen Messwertverstärker auf, welcher mit dem piezoelektrischen Element verbunden ist. Die Verwendung eines Messwertverstärkers ist dahingehend vorteilhaft, da kleinste Druckänderungen beim piezoelektrischen Element nur zu geringen elektrischen Signalen führen, diese jedoch durch den Messwertverstärker verstärkt werden können, sodass auch diese letztlich detektierbar sind, womit auch kleinste Änderungen im Vakuum bestimmbar sind.

Um abermals die Nachweisempfindlichkeit der Vorrichtung zu erhöhen, sieht die Vorrichtung in einer besonders vorteilhaften Ausgestaltung vor, dass die Dichtungsmembran eine konzentrische Prägung, bevorzugt eine konzentrische Wellenprägung, aufweist. Hierdurch wird die Messfläche und die Durchbiegung in Richtung des durch die Dichtungsebene abgedichteten Vakuumraums verstärkt.

In einer weiteren vorteilhaften Ausgestaltung der Vorrichtung ist das bei der Dichtungsmembran verwendete Material, bevorzugt Metall, weichgeglüht, wodurch die Flexibilität der Dichtungsmembran verbessert wird. Dies führt ebenfalls zu einer Erhöhung der Empfindlichkeit der Dichtungsmembran auf Druckveränderungen.

Um die Messwerte bzw. Messdaten des piezoelektrischen Elements an etwa eine zentrale Recheneinheit übermitteln zu können, verfügt die Vorrichtung in einer vorteilhaften Ausgestaltung über eine drahtlose und/oder drahtgebundene Kommunikationsschnittstelle. Als drahtgebundene Kommunikationsschnittstellen kann beispielsweise eine Schnittstelle mit einem BUS-System sowie als drahtlose Kommunikationsschnittstelle RFID, Bluetooth, WiFi etc. eingesetzt werden.

In einer weiteren vorteilhaften Ausgestaltung kann die erfindungsgemäße Vorrichtung in ein Verschlusselement, welches zum Abdichten bzw. Verschließen eines evakuierten Vakuums genutzt wird, eingebaut sein oder selbst als ein solches Verschlusselement genutzt werden. Dies ermöglicht den Einbau der Vorrichtung an eine Vakuumhülle auch ohne, dass diese zuvor in die Vakuumhülle integriert werden müsste, z.B. durch Einschweißen der erfindungsgemäßen Vorrichtung in eine entsprechende Vakuumhülle, sodass insbesondere ein nachträglicher Einbau bzw. eine einfache Anwendung der Vorrichtung bei bereits erstellten Vakuumhüllen ermöglicht wird.

Letztlich kann die Vorrichtung für Vakuum-Isolierte-Paneele sowie für gestützte Vakuum-Isolierungen oder andere durch eine Vakuumhülle begrenzte Vakuumräume in einem Druckbereich von 0,1 bis 400 mbar verwendet werden.

Die Erfindung wird nachstehend anhand eines Ausführungsbeispiels näher erläutert.

Es zeigen:
- Fig. 1:: ein Ausführungsbeispiel der Vorrichtung sowie
- Fig. 2:: ein Anwendungsbeispiel der Vorrichtung.

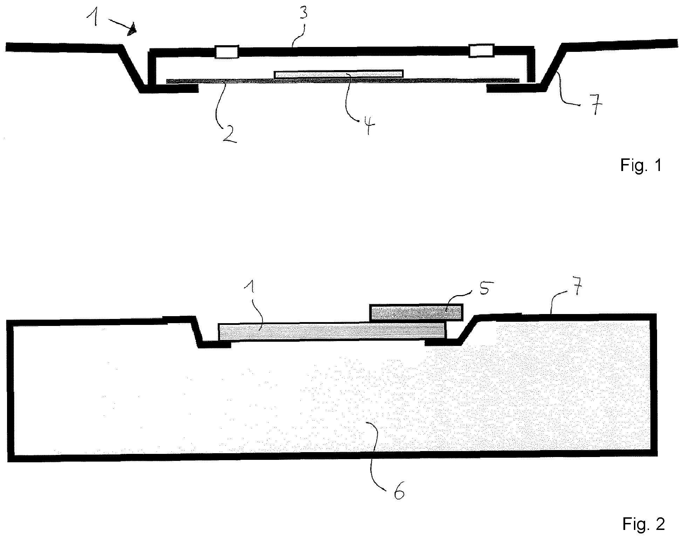

Figur 1 zeigt ein Ausführungsbeispiel der Vorrichtung 1 zur Überwachung eines Vakuums, insbesondere in einem Batteriegehäuse.
Die Vorrichtung ist dabei in eine Vakuumhülle 7 integriert und umfasst eine Dichtungsmembran 2, auf welcher ein piezoelektrisches Element 4 angeordnet ist, sowie eine Referenzebene 3, welche die Dichtungsmembran 2 gegenüber der Außenwelt vollständig umschließt. Dabei ist die Vakuumhülle 7 unterbrochen, sodass die Dichtungsmembran 2 der Vorrichtung 1 mit dem Vakuumraum 6 und dem in dem Vakuumraum 6 vorherrschenden Vakuum in Kontakt steht.

Figur 2 zeigt die Anordnung der Vorrichtung 1 zur Überwachung eines Vakuums, insbesondere innerhalb eines Batteriegehäuses. Der Vakuumraum 6 ist durch die Vakuumhülle 7 begrenzt, wobei die Öffnung der Vakuumhülle 7 durch die Vorrichtung 1 zur Überwachung des Vakuums verschlossen ist. Darüber hinaus verfügt in diesem Anwendungsbeispiel die Vorrichtung 1 über einen Messwertverstärker 5.

Ändert sich nun der Druck des Vakuums innerhalb des Vakuumraums 6, welche durch die Vakuumhülle 7 umschlossen ist, so führt dies zu einer Veränderung der Form bzw. zu einer Biegung der Dichtungsmembran 2, wodurch ebenfalls das piezoelektrische Element 4, welches auf der Dichtungsmembran 2 angeordnet ist, verändert bzw. gebogen wird, wodurch ein elektrisches Signal vom piezoelektrischen Element 4 abgegeben und vom Messwertverstärker 5 verstärkt wird, womit auch kleinste Änderungen des Vakuums innerhalb des Vakuumraums 6 detektierbar sind.

Somit ist vorstehend eine Vorrichtung zur Überwachung eines Vakuums, insbesondere eines Vakuums innerhalb eines Batteriegehäuses, offenbart, die eine flächenbündige Druckmessvorrichtung bereitstellt, bei der die Übertragung des Messsignals nicht durch die umgebende Metallwandung gestört wird und die insbesondere für gestützte Vakuum-Isolierungen geeignet ist.

### BEZUGSZEICHENLISTE

- 1: Vorrichtung
- 2: Dichtungsmembran
- 3: Referenzebene
- 4: Piezoelektrisches Element
- 5: Messverstärker
- 6: Vakuumraum
- 7: Vakuumhülle

## Patentansprüche

1. Vorrichtung (1) zur Überwachung eines Vakuums, insbesondere in sicherheitsrelevanten Bauteilen,
**dadurch gekennzeichnet, dass** diese eine Dichtungsmembran (2), ein piezoelektrisches Element (4) und eine starre druckdifferenzfreie Referenzebene (3) aufweist, die die Dichtungsmembran (2) vollständig umgibt, wobei die Dichtungsmembran (2) einen Vakuumraum (6) abdichtet und das piezoelektrische Element (4) auf der Dichtungsmembran (2) angeordnet ist, sodass eine druckabhängige Verschiebung der Dichtungsmembran (2) durch das piezoelektrische Element (4) bestimmbar ist.

2. Vorrichtung gemäß Anspruch 1, **dadurch gekennzeichnet, dass** die Dichtungsmembran (2) eine Folie, bevorzugt eine Edelstahlfolie, ist, besonders bevorzugt mit einer Stärke von wenigstens 0,5 mm.

3. Vorrichtung gemäß Anspruch 1 oder 2, **dadurch gekennzeichnet, dass** das piezoelektrische Element (4) in Form einer Folie ausgestaltet ist.

4. Vorrichtung gemäß einem der vorhergehenden Ansprüche, **dadurch gekennzeichnet, dass** diese einen Messwertverstärker (5) aufweist, welcher mit dem piezoelektrischen Element (4) verbunden ist.

5. Vorrichtung gemäß einem der vorhergehenden Ansprüche, **dadurch gekennzeichnet, dass** die Dichtungsmembran (2) eine konzentrische Prägung, bevorzugt eine konzentrische Wellenprägung, aufweist.

6. Vorrichtung gemäß einem der vorhergehenden Ansprüche, **dadurch gekennzeichnet, dass** die Dichtungsmembran (2) weichgeglüht ist.

7. Vorrichtung gemäß einem der vorhergehenden Ansprüche, **dadurch gekennzeichnet, dass** diese über eine drahtlose und/oder drahtgebundene Kommunikationsschnittstelle verfügt.

8. Vorrichtung gemäß einem der vorhergehenden Ansprüche, **dadurch gekennzeichnet, dass** diese in einem Verschlusselement, welches zum Verschließen des evakuierten Vakuumraums genutzt wird, eingebaut ist oder selbst als Verschlusselement nutzbar ist.

9. Verwendung einer Vorrichtung gemäß einem der vorhergehenden Ansprüche für Vakuum-Isolier-Paneele sowie gestützte Vakuum-Isolierungen oder andere Vakuumräume in einem Druckbereich von 0,1 bis 400 mbar.

## Geänderte Patentansprüche

### Geänderte Patentansprüche gemäss Regel 137(2) EPÜ.

1. Vorrichtung (1) zur Überwachung eines Vakuums, insbesondere in sicherheitsrelevanten Bauteilen, umfassend eine Dichtungsmembran (2), ein piezoelektrisches Element (4) und eine starre druckdifferenzfreie Referenzebene (3), wobei das piezoelektrische Element (4) auf der Dichtungsmembran (2) derart angeordnet ist, dass eine druckabhängige Verschiebung der Dichtungsmembran (2) durch das piezoelektrische Element (4) bestimmbar ist und die Dichtungsmembran einen Vakuumraum (6) abdichtet,
**dadurch gekennzeichnet, dass** die starre druckdifferenzfreie Referenzebene (3) die Dichtungsmembran (2) vollständig umgibt.

2. Vorrichtung gemäß Anspruch 1, **dadurch gekennzeichnet, dass** die Dichtungsmembran (2) eine Folie, bevorzugt eine Edelstahlfolie, ist, besonders bevorzugt mit einer Stärke von wenigstens 0,5 mm.

3. Vorrichtung gemäß Anspruch 1 oder 2, **dadurch gekennzeichnet, dass** das piezoelektrische Element (4) in Form einer Folie ausgestaltet ist.

4. Vorrichtung gemäß einem der vorhergehenden Ansprüche, **dadurch gekennzeichnet, dass** diese einen Messwertverstärker (5) aufweist, welcher mit dem piezoelektrischen Element (4) verbunden ist.

5. Vorrichtung gemäß einem der vorhergehenden Ansprüche, **dadurch gekennzeichnet, dass** die Dichtungsmembran (2) eine konzentrische Prägung, bevorzugt eine konzentrische Wellenprägung, aufweist.

6. Vorrichtung gemäß einem der vorhergehenden Ansprüche, **dadurch gekennzeichnet, dass** die Dichtungsmembran (2) weichgeglüht ist.

7. Vorrichtung gemäß einem der vorhergehenden Ansprüche, **dadurch gekennzeichnet, dass** diese über eine drahtlose und/oder drahtgebundene Kommunikationsschnittstelle verfügt.

8. Vorrichtung gemäß einem der vorhergehenden Ansprüche, **dadurch gekennzeichnet, dass** diese in einem Verschlusselement, welches zum Verschließen des evakuierten Vakuumraums genutzt wird, eingebaut ist oder selbst als Verschlusselement nutzbar ist.

9. Verwendung einer Vorrichtung gemäß einem der vorhergehenden Ansprüche für Vakuum-Isolier-Paneele sowie gestützte Vakuum-Isolierungen oder andere Vakuumräume in einem Druckbereich von 0,1 bis 400 mbar.
